# EUROPEAN PATENT APPLICATION

(11) **EP 1 968 240 A1**
(43) Date of publication of application: **10.09.2008**
(21) Application number: 06842877.0
(22) Date of filing: 19.12.2006
(51) Int. Cl.: H04L 12/28, H04Q 7/38

(54) **COMMUNICATION CONTROL METHOD, COMMUNICATION MONITORING METHOD, COMMUNICATION SYSTEM, ACCESS POINT AND PROGRAM**

(30) Priority: 26.12.2005 JP 2005372934
(71) Applicant: NEC Corporation, Minato-ku Tokyo 108-8001 (JP)
(72) Inventor: SEKIYA, Kayato, NEC Corporation, Tokyo 1088001 (JP)
(74) Representative: Vossius & Partner
(86) International application number: PCT/JP2006/325273
(87) International publication number: WO 2007/074679

(57) **Abstract**

Electro-magnetic wave reachability between a wireless client and wireless access points including access points of wireless communication system components is judged for every wireless access point, useful states of wireless resources at the wireless access points are calculated for every wireless access point, and incoming and outgoing calls of a communication session are controlled or usability or vacant capacity of the wireless communication system is monitored in accordance with information including judged results of the electro-magnetic wave reachability and calculated results of the useful states of wireless resources.

## Description

### [APPLICABLE FIELD IN THE INDUSTRY]

The present invention relates to a communication control method, a communication monitoring method, a wireless access point, a communication system and a program, and more particularly to a communication control method, a control monitoring method, a communication device, a wireless access point, a communication system, and a program for controlling and monitoring a communication session based upon information of radio wave reachability between a wireless client and a wireless access point, and a wireless resource use status of the wireless access point.

### [BACKGROUND ART]

The wireless communication system, which puts a wireless network technology such as a wireless local area network (wireless LAN) to practical use, as a rule, is configured of a plurality of wireless access points, a plurality of wireless clients, a backbone network for playing a role of making a connection between the wireless access points or a connection with an external network, and a server appliance for managing these. The wireless client makes a connection with one of a plurality of the access points according to a predetermined procedure, and transmits/receives a data of various applications via the wireless access point and the backbone network.

In general, the application includes a connection-oriented application and a connectionless-oriented application. The connection-oriented application is characterized in pre-performing a process of establishing a communication session prior to transmission/reception of data between the applications, transmitting/receiving a data, and thereafter performing a process of releasing the communication session.

A voice call is listed as a representative of such an application. In this case, the process of an outgoing call/incoming call, and the process of finishing a call are equivalent to the process of establishing a session and the process of releasing the session, respectively. By the way, there is the case that, in a part of the applications including the voice call, a predetermined quality feature is required for a wireless network of its low layer so as to maintain a quality of a service that its application provides at a predetermined level. For example, the voice call service necessitates suppressing a rate of a packet loss that occurs in the wireless network at a level of several percents or less so as to keep its voice quality at a level such that the a conversation is not disturbed.

However, in the wireless LAN as well as many wireless networks, a wireless band could lacks and, resultantly, a large packet loss could occur depending upon the number of the wireless clients that execute the application via an identical wireless access point and a communication situation because a plurality of the wireless clients having connected with the wireless access point share a wireless band of which a capacity is limited.

So as to solve this problem, for example, in a Patent document 1, the master unit, which is connected with a wireless LAN base station and takes a call control of a wireless telephone (wireless client), monitors the traffic information such as a transmission/reception quantity and the number of terminals recorded for each wireless LAN base station (wireless access point), and makes a reference to the traffic information of the corresponding base station responding to a log-in notification (a request for making a connection, or a request for establishing a session) from the wireless telephone. And, it takes a control such that the log-in is not permitted when the traffic information exceeds a predetermined threshold. Putting such a technology to practical use makes it possible to take a control such that a request for making a call by an eleventh-place wireless client is rejected in the case that ten wireless clients during a call are currently using the wireless access point when the wireless point has, for example, a capacity that at most ten wireless clients during a call can be accommodated.

On the other hand, realizing a service area having a certain-scale square measure or more necessitates arranging a plurality of the wireless access points scatteredly. At this moment, name the service area, which each wireless access point can cover, a cell, and it can be seen that providing the service that allows continuity to be maintained for migration of the wireless client necessitates arranging respective cells while partially overlapping each of them upon the other. At this moment, as a rule, a design is made so that each at the neighboring cells uses a different operation frequency.

The so-called operation frequency indicates a central frequency of a wireless signal that is used when the corresponding wireless access point and the wireless client having made a connection therewith transmit a wireless packet, and its unit is Hz or MHz, and the operation frequency is caused to correspond to an integral number according to a specific rule in many cases for expression (this is named a channel number).

In a plurality of the cells, which coincides with each other or are close to each other, respective performances, as a rule, decline due to an interaction named interference. The wireless LAN exhibits, for example, a feature such that when two cells each having an identical operation frequency are fully overlapped upon each other, a total sum of respective capacities becomes equal to the capacity of a single cell (each capacity is halved equivalently).

Further, when the cells each having an identical operation frequency are partially overlapped upon each other, its feature, in general, is complicated due to a positional relation of each wireless access point and the wireless client. Thus, as a rule, the design is made so that the different operation frequency is used in the neighboring cells so as to enhance efficiency of the capacity that is obtained for the invested access point resources, or to avoid its complexity.

However, the number of the usable operation frequencies is limited. For example, in the wireless LAN having a 2.4 GHz band that is widely being used, up to now, the number of independent operation frequencies that do not exert an influence upon each other is at most four. As a result, it is extremely difficult to set a different operation frequency in each of every neighboring cells as a matter of fact. In particular, the business system, which often arranges the wireless access points so as to provide redundancy for a single failure, necessitates overlapping the cells more densely, and in such a case, it becomes yet difficult to set a different operation frequency in each of the neighboring cells.

Now upon bringing an idea into shape, it can be safely said that it is essential to apply the control having an influence taken into consideration that is exerted upon respective performances in the case that a plurality of the cells each having an identical frequency are overlapped upon each other to a control for maintaining the quality feature of the wireless network, above all, the service quality feature of the application that operates over the wireless network.

Patent document 1: JP-P2003-284144A

### [DISCLOSURE OF THE INVENTION]

### [PROBLEMS TO BE SOLVED BY THE INVENTION]

However, the related art has not taken into consideration an influence that is exerted upon respective performances in the case that a plurality of the cells each having an identical frequency are overlapped upon each other. For this, the related art causes a problem that the control or the monitoring cannot be realized for avoiding the situation in which initiating a new communication session in the wireless client having made a connection with a certain wireless access point resultantly causes the service quality to deteriorate in the communication session of the wireless client having made a connection with another wireless access point.

### (An object of the present invention)

The present invention has been accomplished in consideration of the foregoing problems, and has an object of realizing a communication control method and a monitoring method that enables the service quality of the application to be maintained also in an environment where a plurality of the cells each having an identical frequency are overlapped upon each other, which exerts an influence upon respective performances.

### [MEANS FOR SOLVING THE PROBLEMS]

The 1st invention for solving the above-mentioned problems, which is a communication control method, characterized in comprising: a first radio wave reachability determination step of determining radio wave reachability between each of one client or more and each of one access point or more; a wireless resource use status calculation step of calculating a wireless resource use status of said each access point; and a control step of controlling an establishment of a communication session based upon at least both of a determination result of said first radio wave reachability determination step and a calculation result of said wireless resource use status calculation step.

The 2nd invention for solving the above-mentioned problems, in the above-mentioned invention, is characterized in that: said communication control method comprises a second radio wave reachability determination step of determining radio wave reachability between each of a part of access points and the other; and said control step is a step of controlling an establishment of the communication session based upon at least all of the determination result of said first radio wave reachability determination step, the calculation result of said wireless resource use status calculation step, and the determination result of said second radio wave reachability determination step.

The 3rd invention for solving the above-mentioned problems, in the above-mentioned inventions, is characterized in that said first radio wave reachability determination step is a step of making a determination by whether or not said each access point can receive a frame being transmitted by said client without a frame error generated.

The 4th invention for solving the above-mentioned problems, in the above-mentioned inventions, is characterized in that said first radio wave reachability determination step is a step of making a determination by whether or not said client can receive a wireless frame being transmitted by said each access point without a frame error generated.

The 5th invention for solving the above-mentioned problems, in the above-mentioned inventions, is characterized in that said second radio wave reachability determination step is a step of making a determination by whether or not a frame being transmitted by said each access point can be received by the access point other than the access point having transmitted said frame without a frame error generated.

The 6th invention for solving the above-mentioned problems, in the above-mentioned inventions, is characterized in that the frame being transmitted by said access point is transmitted at an almost identical time period.

The 7th invention for solving the abode-mentioned problems, in the above-mentioned inventions, is characterized in that the frame being transmitted by said access point includes information indicative of an operation frequency of this access point.

The 8th invention for solving the above-mentioned problems, in the above-mentioned inventions, is characterized in that the frame being transmitted by said access point includes the wireless resource use status calculated in said wireless resource use status calculation step.

The 9th invention for solving the above-mentioned problems, in the above-mentioned inventions, is characterized in that the frame being transmitted by said access point includes the determination result of said second radio wave reachability determination step.

The 10th invention for solving the abode-mentioned problems, in the above-mentioned inventions, is characterized in that said first radio wave reachability determination step is a step of making a determination by whether or not a difference of an operation frequency between said client and said access point is equal or less than a constant value.

The 11th invention for solving the above-mentioned problems, in the above-mentioned inventions, is characterized in that said second radio wave reachability determination step is a step of making a determination by whether or not a difference of an operation frequency between each of the access points and the other is equal or less than a constant value.

The 12th invention for solving the above-mentioned problems, in the above-mentioned inventions, is characterized in, in said second radio wave reachability determination step, determining whether or not the radio wave reachability exists based upon a result of having retrieved information of the pre-stored radio wave reachability between each of all of the access points and the other.

The 13th invention for solving the above-mentioned problems, in the above-mentioned inventions, is characterized in that: said wireless resource use status calculation step is a step of calculating the wireless resource use status access point by access point; and said wireless resource use status includes the number of the clients that are in connection with the access point.

The 14th invention for solving the above-mentioned problems, in the above-mentioned inventions, is characterized in that: said wireless resource use status calculation step is a step of calculating the wireless resource use status access point by access point; and said wireless resource use status includes the number of the clients that are in connection with the access point and yet have established a communication session.

The 15th invention for solving the above-mentioned problems, in the above-mentioned inventions, is characterized in that: said wireless resource use status calculation step is a step of calculating the wireless resource use status access point by access point; and said wireless resource use status includes information indicative of a vacant wireless band that can be used by the access point.

The 16th invention for solving the above-mentioned problems, in the above-mentioned inventions, is characterized in that said communication session is a voice call.

The 17th invention for solving the above-mentioned problems, in the above-mentioned inventions, is characterized in that said communication session is a television telephone.

The 18th invention for solving the above-mentioned problems, in the above-mentioned inventions, is characterized in that said client is a wireless LAN client and said access point is a wireless LAN access point.

The 19th invention for solving the above-mentioned problems, in the above-mentioned inventions, is characterized in comprising: a first radio wave reachability determining means for determining radio wave reachability between each of one client or more and each of one access point or more; a wireless resource use status calculating means for calculating a wireless resource use status of said each access point; and a controlling means for of controlling an establishment of a communication session based upon at least both of a determination result of said first radio wave reachability determining step and a calculation result of said wireless resource use status calculating srep.

The 20th invention for solving the above-mentioned problems, in the above-mentioned inventions, is characterized in that: said communication control system comprises a second radio wave reachability determining means for determining radio wave reachability between each of a part of access points and the other; and said controlling means controls an establishment of the communication session based upon at least all of the determination result of said first radio wave reachability determining means, the calculation result of said wireless resource use status calculating means, and the determination result of said second radio wave reachability determining means.

The 21st invention for solving the above-mentioned problems, which is a server, characterized in comprising: a radio wave reachability/wireless resource use status collection unit for obtaining radio wave reachability between each of one client or more and each of one access point or more, and a wireless resource use status of said each access point; and a session start determination unit for controlling an establishment of a communication session based upon the radio wave reachability and wireless resource use status obtained by said radio wave reachability/wireless resource use status collection unit.

The 22nd invention for solving the above-mentioned problems, in the above-mentioned inventions, is characterized in that said radio wave reachability/wireless resource use status collection unit further determines radio wave reachability between each of a part of access points and the other.

The 23rd invention for solving the above-mentioned problems, which is a program, characterized in causing a computer to execute: a radio wave reachability/wireless resource use status collection process of obtaining radio wave reachability between each of one client or more and each of one access point or more, and a wireless resource use status of said each access point; and a session start determination process of controlling an establishment of a communication session based upon the radio wave reachability and wireless resource use status obtained in said radio wave reachability/wireless resource use status collection section.

The 24th invention for solving the abode-mentioned problems, in the above-mentioned inventions, is characterized in that said radio wave reachability/wireless resource use status collection section further comprises a process of determining radio wave reachability between each of a part of access points and the other.

The 25th invention for solving the above-mentioned problems, which is a communication monitoring method in a wireless communication system in which one access point or more is provided, and a client makes a connection with one of said access points, and establishes a communication session with other communication appliances via said access point with which it has made a connection, characterized in comprising: a first radio wave reachability determination step of determining radio wave reachability between said client and each of said one access point or more; a wireless resource use status calculation step of calculating a wireless resource use status of said each access point; and a monitoring step of calculating one of a usability and a vacant capacity of an entirety of said wireless communication system or a part thereof, or both based upon at least both of a determination result of said first radio wave reachability determination step and a calculation result of said wireless resource use status calculation step.

The 26th invention for solving the above-mentioned problems, in the above-mentioned inventions, is characterized in that: said communication monitoring method comprises a second radio wave reachability determination step of determining radio wave reachability between each of a part of access points and the other; and said monitoring step is a step of calculating one of a usability and a vacant capacity of an entirety of said wireless communication system or a part thereof, or both based upon at least all of the determination result of said first radio wave reachability determination step, the calculation result of said wireless resource use status calculation step, and the determination result of said second radio wave reachability determination step.

The 27th invention for solving the above-mentioned problems, in the above-mentioned inventions, is characterized in that said first radio wave reachability determination step is a step of making a determination by whether or not said each access point can receive a frame being transmitted by said client without a frame error generated.

The 28th invention for solving the abode-mentioned problems, in the above-mentioned inventions, is characterized in that said first radio wave reachability determination step is a step of making a determination by whether or not said client can receive a frame being transmitted by said each access point without a frame error generated.

The 29th invention for solving the abode-mentioned problems, in the above-mentioned inventions, is characterized in that said second radio wave reachability determination step is a step of making a determination by whether or not a frame being transmitted by said each access point can be received by the access point other than the access point having transmitted said frame without a frame error generated.

The 30th invention for solving the above-mentioned problems, in the above-mentioned inventions, is characterized in that the frame being transmitted by said access point is transmitted at an almost identical time period.

The 31st invention for solving the above-mentioned problems, in the above-mentioned inventions, is characterized in that the frame being transmitted by said access point includes information indicative of an operation frequency of its access point.

The 32nd invention for solving the above-mentioned problems, in the above-mentioned inventions, is characterized in that the frame being transmitted by said access point includes the wireless resource use status calculated in said wireless resource use status calculation step.

The 33rd invention for solving the above-mentioned problems, in the above-mentioned inventions, is characterized in that the frame being transmitted by said access point includes the determination result of said second radio wave reachability determination step.

The 34th invention for solving the above-mentioned problems, in the above-mentioned inventions, is characterized in that said first radio wave reachability determination step is a step of making a determination by whether or not a difference of an operation frequency between said client and said access point is equal or less than a constant value.

The 35th invention for solving the above-mentioned problems, in the above-mentioned inventions, is characterized in that said second radio wave reachability determination step is a step of making a determination by whether or not a difference of an operation frequency between each of the access points and the other is equal or less than a constant value.

The 36th invention for solving the above-mentioned problems, in the above-mentioned inventions, is characterized in, in said second radio wave reachability determination step, determining whether or not the radio wave reachability exists based upon a result of having retrieved information of the pre-stored radio wave reachability between each of all of the access points within the communication system and the other.

The 37th invention for solving the above-mentioned problems, in the above-mentioned inventions, is characterized in that: said wireless resource use status calculation step is a step of calculating the wireless resource use status access point by access point; and said wireless resource use status includes the number of the clients that are in connection with the access point.

The 38th invention for solving the above-mentioned problems, in the above-mentioned inventions, is characterized in that: said wireless resource use status calculation step is a step of calculating the wireless resource use status access point by access point; and said wireless resource use status includes the number of the wireless clients that are in connection with the access point and yet have established a communication session.

The 39th invention for solving the above-mentioned problems, in the above-mentioned inventions, is characterized in that: said wireless resource use status calculation step is a step of calculating the wireless resource use status access point by access point; and said wireless resource use status includes information indicative of a vacant wireless band that can be used by the access point.

The 40th invention for solving the above-mentioned problems, which is a communication monitoring system in a wireless communication system in which one access point or more is provided, and a client makes a connection with one of said access points, and establishes a communication session with other communication appliances via said access point with which it has made a connection, characterized in comprising: a first radio wave reachability determining means for determining radio wave reachability between said client and each of said one access point or more; a wireless resource use status calculating means for calculating a wireless resource use status of said each access point; and a monitoring means for calculating one of a usability and a vacant capacity of an entirety of said wireless communication system or a part thereof, or both based upon at least both of a determination result of said first radio wave reachability determination means and a calculation result of said wireless resource use status calculation means.

The 41st invention for solving the above-mentioned problems, in the above-mentioned inventions, is characterized in that: said communication monitoring system comprises a second radio wave reachability determining means for determining radio wave reachability between each of a part of access points and the other; and said monitoring step calculates one of a usability and a vacant capacity of an entirety of said wireless communication system or a part thereof, or both based upon at least all of the determination result of said first radio wave reachability determining means, the calculation result of said wireless resource use status calculating means, and the determination result of said second radio wave reachability determining means.

The 42nd invention for solving the above-mentioned problems, which is an access point in a wireless communication system in which one access point or more is provided, and a client makes a connection with one of said access points and establishes a communication session with other communication appliances via said access point with which it has made a connection, characterized in receiving a frame from said client, and notifying an identifier of said client and a wireless resource use status to a predecided destination when no frame error exists in said frame.

The 43rd invention for solving the abode-mentioned problems, in the above-mentioned inventions, is characterized in that said wireless resource use status includes the number of the clients that are in connection with its own.

The 44th invention for solving the abode-mentioned problems, in the above-mentioned inventions, is characterized in that said wireless resource use status includes the number of the wireless clients that are in connection with its own and yet have established a communication session.

The 45th invention for solving the above-mentioned problems, in the above-mentioned inventions, is characterized in that said wireless resource use status includes information indicative of a vacant wireless band that is usable.

That is, in the present invention, radio wave reachability between the wireless client and each of the wireless access points including the wireless access point, being a component of the wireless communication system, is determined for each wireless access point, and in addition hereto, a wireless resource use status of the wireless access point is calculated for each wireless access point and an establishment of the communication session is controlled based upon information including a determination result of the radio wave reachability and a calculation result of the wireless resource use status.

Besides, in the present invention, an establishment of the communication session is preferably controlled based upon at least information including a determination result of the radio wave reachability between each of a part of the wireless access points and the other in addition to a determination result of the radio wave reachability between the wireless client and the wireless access point.

Besides, in the present invention, it is also possible to monitor a usability and a vacant capacity of the wireless communication system based upon the foregoing information.

In the determination of the radio wave reachability, the fact that the wireless frame being transmitted by the wireless access point or the wireless client can be conveyed to the wireless access point or the wireless client, being a partner, without a frame error generated, and yet the operation frequencies that both use in the communication session, respectively, are in a relation of interfering with each other can be used as a criteria for determining that the reachability exists.

Further, in the present invention, when using a wireless frame being transmitted by the wireless access point in the determination of the radio wave reachability, its wireless frame preferably includes information indicative of the operation frequency of the transmission source wireless access point, a determination result of the radio wave reachability to the other wireless access points, and a calculation result of the wireless resource use status. This enables necessary information to be efficiently conveyed to a main body performing the process associated with the control.

By the way, in the present invention, a determination of the radio wave reachability between the wireless access point and the wireless access point can be also realized by retrieving pre-stored information. This method can be used when the position and the setting of the wireless access point are fixed, and no large fluctuation in the radio wave reachability between the wireless access points exists.

As described above, the present invention, which is a communication control method including: a first radio wave reachability determination step of determining the radio wave reachability between each of one client or more and each of one access point or more; a wireless resource use status calculation step of calculating the wireless resource use status each of the access points; and a control step of controlling an establishment of the communication session based upon at least both of a determination result of the first radio wave reachability determination step and a calculation result of the wireless resource use status calculation step, makes it possible to establish a new session without exerting an influence upon the already-established other sessions.

### [AN ADVANTAGEOUS EFFECT OF THE INVENTION]

The effect of the present invention lies in a point that the service quality of the application can be maintained also in an environment where a plurality of the cells each having an identical frequency are overlapped upon each other, which exerts an influence upon respective performance, and in particular, the control and the monitoring are enabled for avoiding the situation in which initiating a new communication session in the wireless client having made a connection with a certain wireless access point resultantly causes the service quality to deteriorate in the communication session of the wireless client having made a connection with another wireless access point.

The reason is that the wireless client that is going to establish the communication session grasps a relation of the radio wave reachability to not only the wireless access point with which its own has made a connection but also the access point that exists in the neighborhood and has the radio wave reachability, and in addition hereto, to the other access points having the radio wave reachability to these access points, and besides, estimates an influence caused by an establishment of the communication session, or calculates the usability and the vacant capacity of the wireless communication system based upon the use situations of the wireless resources at these access points.

### [BRIEF DESCRIPTION OF THE DRAWINGS]

[Fig. 1] Fig. 1 is a block diagram illustrating a configuration of the typical wireless communication system to which the present invention is applied.
[Fig. 2] Fig. 2 is a time chart in the case that an outgoing call (session establishment) in a wireless client 20a is permitted in accordance with the present invention.
[Fig. 3] Fig. 3 is a flowchart illustrating a process of determining whether or not the outgoing call (session establishment) in a server 30 is permitted.
[Fig. 4] Fig. 4 is a block diagram illustrating a configuration of the typical communication control device (server) to which the present invention is applied.
[Fig. 5] Fig. 5 illustrates an example of information that the server 30 uses for estimating a call quality.
[Fig. 6] Fig. 6 illustrates an example of a table that the server 30 searches for estimating a call quality.
[Fig. 7] Fig. 7 is a block diagram illustrating the typical wireless communication system to which the present invention is applied, and another network that neighbors it.
[Fig. 8] Fig. 8 is a time chart in the case that an incoming call in the wireless client 20a is rejected in accordance with the present invention.
[Fig. 9] Fig. 9 is a flowchart illustrating a process of transmitting/receiving a wireless frame at the wireless access point.
[Fig. 10] Fig. 10 is a block diagram illustrating a configuration of the typical wireless access point to which the present invention is applied.
[Fig. 11] Fig. 11 is a flowchart illustrating a process of determining whether or not the incoming call in the wireless client 20a is permitted.

### [DESCRIPTION OF NUMERALS]

10a to 10c wireless access points
11a wireless access point (connected with a neighboring network)
12 network interface of a wireless access point
13 wireless resource use status measurement unit
14 information storage unit of a wireless access point
15 radio wave reachability information collection unit
16 wireless frame generation unit
20a to 20e wireless clients
30 server
31 network interface of a server
32 radio wave reachability/wireless resource use status collection unit
33 information storage unit of a server
34 session start determination unit
100 backbone network
101 neighboring network
110a to 110c wire communication appliances

### [BEST MODE FOR CARRYING OUT THE INVENTION]

Next, an embodiment of the present invention will be explained in details by making a reference to the accompanied drawings.

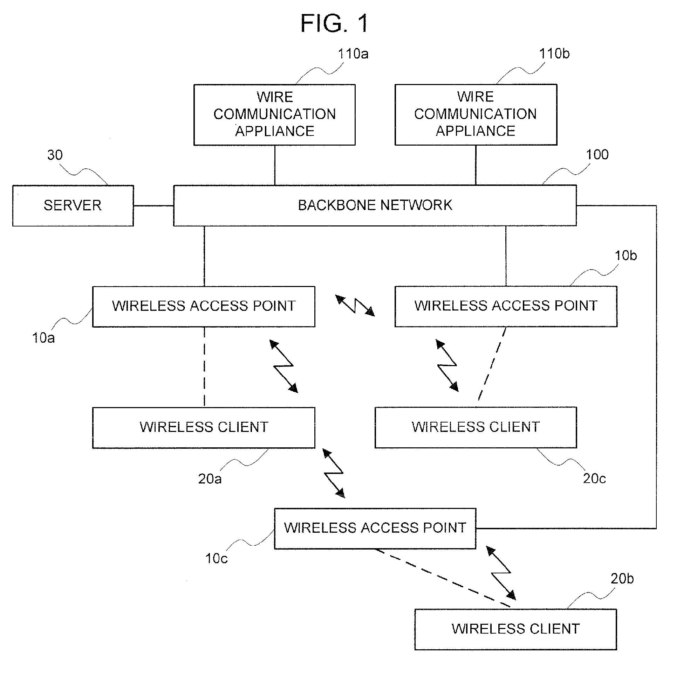

Fig. 1 is a block diagram illustrating a configuration of the typical communication system (herein, in particular, the wireless communication system) to which the present invention is applied. Each of access points (herein, in particular, it is assumed to be a wireless access point) 10a to 10c plays a role of transferring a communication data being transmitted/received by the connected client (herein, in particular, it is assumed to be a wireless client) to a backbone network 100 in some cases, and to the other wireless clients having made a connection with its own in some cases.

Each of the wireless clients 20a and 20b makes a connection with one of a plurality of the wireless access points, and makes communication with the other wireless clients and the appliance other than these via the access point with which it has made a connection. In this configuration example, it is assumed that the wireless client 20a has made a connection with the wireless access point 10a, and the wireless client 20b has made a connection with the wireless access point 10c. Each of wire communication appliances 110a and 110b is a communication appliance that can exchange a data with the wireless client via a backbone connection. As a wire communication appliance, for example, a wire IP telephone is listed.

A server 30 mediates an establishment of the communication session between the wireless client and the wire communication appliance. As such a server, for example, an SIP (Session Initiation Protocol) server is listed. The backbone network 100 plays a role of transferring a communication data to the wireless access point, the server, and the wire communication appliance.

Further, in this configuration example, it is assumed that the wireless access point 10a is arranged so that the wireless access point 10a and each of the wireless access point 10b and the wireless client 20a have radio wave reachability to each other, and the wireless access point 10c is arranged so that the wireless access point 10c and each of the wireless client 20a and the wireless client 20b have radio wave reachability to each other.

Further, it is assumed that all of the access points 10a to 10c in the figure operate at an identical frequency (at a channel no. 1).

Herein, as a best mode for carrying out the invention, the case of utilizing the wireless frame being transmitted by the wireless client in order to determine the radio wave reachability between the wireless client and each of two wireless access points or more including the wireless access point with which the wireless client is in connection (to determine a first radio wave reachability), and further, of retrieving the radio wave reachability information pre-stored in the server 30 in order to determine the radio wave reachability between each of the two wireless access points or more and the other (to determine a second radio wave reachability) will be explained.

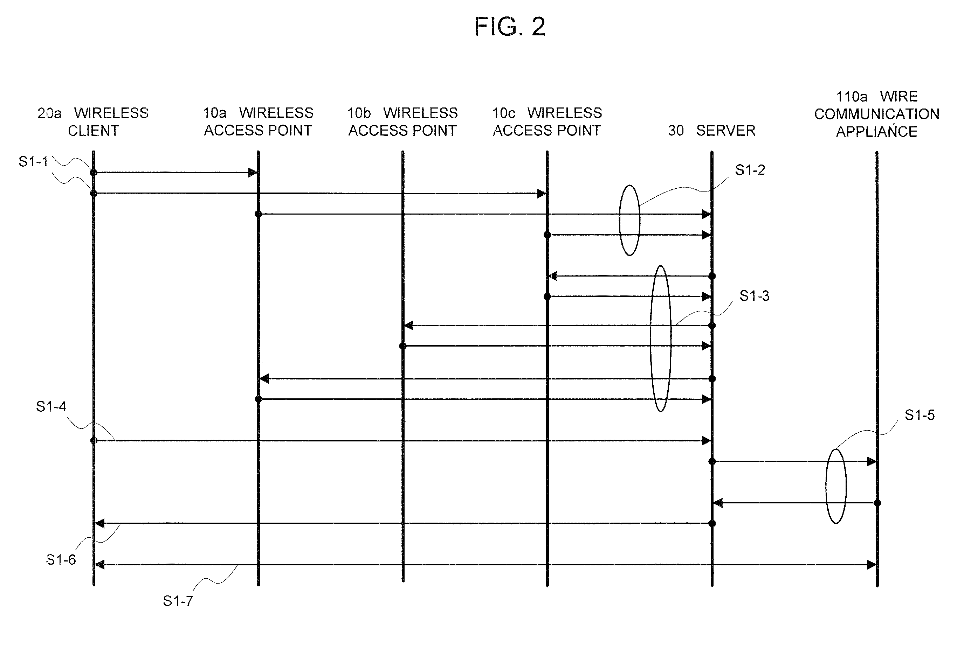

An operation of the present invention will be explained by making a reference to Fig. 2. Herein, the case that the client 20a requests a voice call to the wire communication appliance 110a (requests an establishment of a session with the wire communication appliance 110a) is exemplified. At this time, it is assumed that the client 20b is making a call to the wire communication appliance 110b.

It is assumed that the client 20b makes a request for an outgoing call or an incoming call (a request for a session establishment) via the server 30 at the moment of starting it, so the server 30 grasps the call statuses of the client 20b as well as all terminals.

All of the wireless clients regularly transmit the wireless frame in order to determine the radio wave reachability to the wireless access point (S1-1). In Fig. 2, the case that the wireless client 20a transmits the wireless frame is published.

As a destination address of this frame, a broadcast address or a private multicast address is used. The wireless access point is pre-configured not to scrap this wireless frame so long as no frame error exists at the time of having received this wireless frame.

In this example, only the wireless access point 10a and 10c can receive the corresponding wireless frame without a frame error generated because the wireless client 20a has the radio wave reachability to each of the wireless access points 10a and 10c. Herein, the client 20a may repeatedly transmit the corresponding wireless frame several times. Doing so makes it possible to surely determine that the wireless access point as well arranged in a borderline of the radio wave reachability has the radio wave reachability.

Continuously, the wireless access points 10a and 10c notify to the server 30 the effect that the corresponding wireless frame has been received from the client 20a (S1-2) .

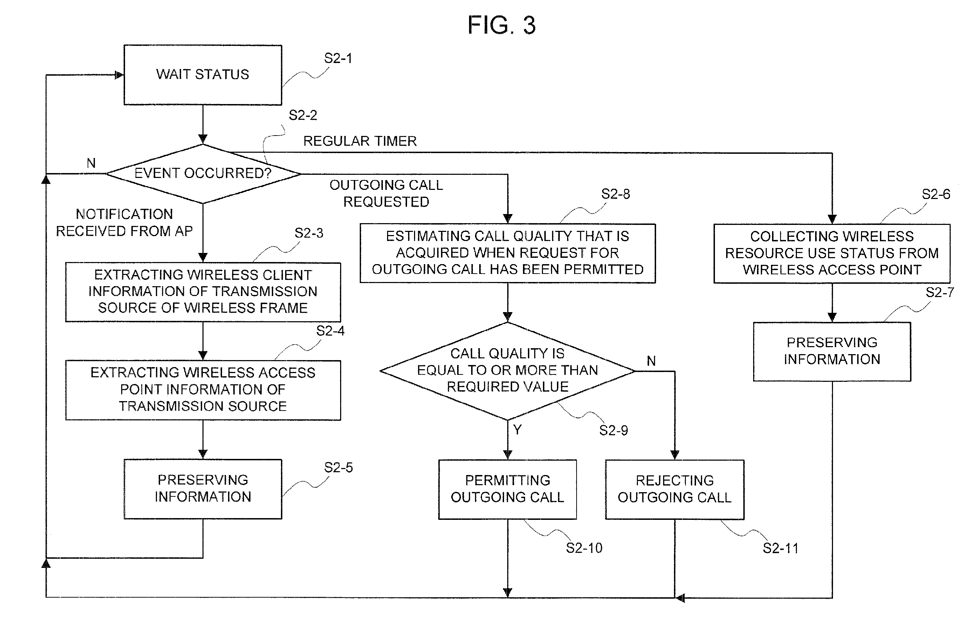

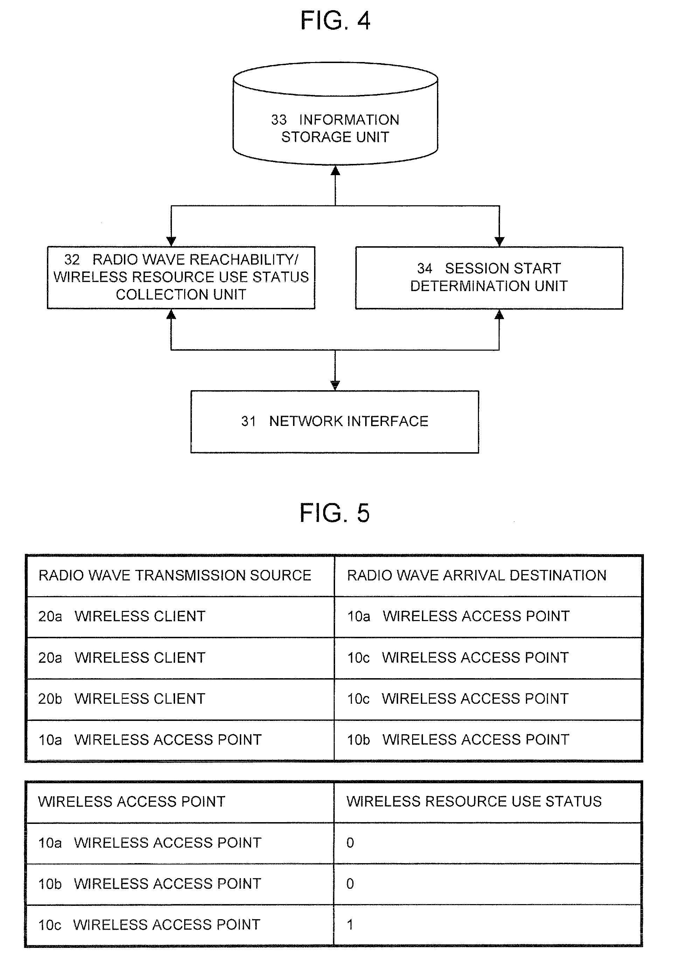

From this, a flowchart of Fig. 3 illustrating an operation of the server 30, and Fig. 4, being a block diagram illustrating a configuration of the server 30, are used together for explanation.

An radio wave reachability/wireless resource use status collection unit 32 of the server 30 receives the foregoing notification via a network interface 31, extracts wireless client information of the transmission source of the relevant wireless frame and access point information from the notification (S2-3 and S2-4), and preserves it in an information storage unit 33 (S2-5).

As a result, the server 30 can grasp that the radio wave reachability between the wireless client 20a and each of the wireless access points 10a and 10c exists.

Likewise, the wireless client 20b regularly transmits a wireless frame, and the access point 10c having received its wireless frame makes a notification to the server, thereby enabling the server 30 to grasp that the radio wave reachability between the wireless client 20b and the access point 10c exists.

The server 30 sets an appropriate lifespan to the notified information, and scraps the information of which the lifespan expired whenever occasion arises, thereby enabling the latest radio wave reachability status to be held. On the other hand, the server 30 can grasp the radio wave reachability between the wireless access points by retrieving the radio wave reachability information pre-stored in the information storage unit 33. Herein, the reason why the server grasps the radio wave reachability between the wireless access points is to take interference between the wireless access points into consideration at the moment of establishing the session.

For example, in this-time example, the server 30 can grasp the fact that the radio wave reachability between the wireless access points 10a and 10b exists by making retrieval. The pre-stored radio wave reachability information can be prepared, for example, based upon a result of a site survey (measurement of an radio wave intensity) that is made at the time of installing the wireless access point, or a result of computing a wireless radio wave propagation simulation.

On the other hand, the radio wave reachability/wireless resource use status collection unit 32 regularly collects the wireless resource use status from the wireless access point (S2-6), and preserves it in the information storage unit 33 (S2-7). For this, the server 30 regularly inquires of the wireless access point (S1-3) .

Alternately, an operation that the wireless access point autonomously makes a notification to the server 30 is also possible. Herein, upon listing an example of collecting the number of the terminals that are establishing the communication session (are making a call) as a wireless resource use status, the number of the terminal that is notified by the wireless access points 10a and 10b is zero (0), and the number of the terminal that is notified by the wireless access point 10c is one (1).

At this time point, a data published in Fig. 5 has been collected in the server.

It is assumed that, in such a status, the wireless client 20a transmits a request for an outgoing call (a request for establishing a session) to the server 30 (S1-4). A session start determination unit 34 of the server 30 processes the request for an outgoing call (the request for establishing a session). The session start determination unit 34 of the server 30 firstly computes how a table of Fig. 5 changes when the request for an outgoing call (the request for establishing a session) by the client 20a has been permitted temporally.

In this example, the wireless resource use status of the of the radio wave arrival destination at the wireless access point 10a is increased by 1 from 0. And, the server 30 computes the call quality in this temporal status (S2-8).

The call quality in the temporal status is computed wireless access point by wireless access point, and the outgoing call (session establishment) is permitted only in a case where the call qualities at all of the wireless access points published in Fig. 5 (in this-time case, the wireless access points 10a to 10c) are satisfied. The call quality at a wireless access point can be realized, for example, by employing a comparison with a table pre-preserved in the information storage unit 33. In the table, all of combinations of the number of the terminals during a call having the radio wave reachability to its access point, and the wireless resources use statuses of the access points having the radio wave reachability to its access point are prepared in advance.

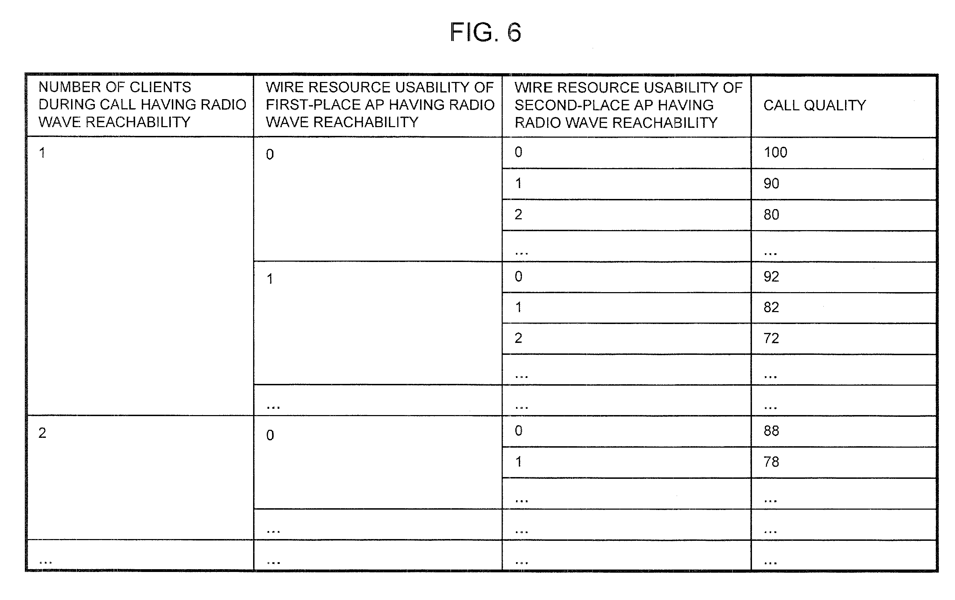

An example of this table is published in Fig. 6. So as to prepare this table, for example, a network simulator can be used for computation. Specifically, as a network simulator, the mode can be used of virtually transmitting/receiving the packet over a computer program to compute a loss rate and a delay of the packet.

Repeating the computation while changing the number of the clients during a call and the wireless resource utilizability of the access point according to a table of Fig. 5 makes it possible to compute the call qualities in respective cases. The number of the computation that is repeated is suppressed to a limited number of the times by setting an appropriate maximum value to the number of the access points having the radio wave reachability, the number of the clients during a call, and the wireless resource utilizability of the access point. The call quality can be calculated with a method more general than the method of calculating the packet loss or the delay. For example, Rating Value, which is an existing technology and is defined by ITU-TG.107, can be used.

The case that the call quality of the access point 10a in the foregoing temporal status is decided according to a table of Fig. 6 will be explained. The client during a call having the radio wave reachability to the access point 10a is the client 20a temporally assumed to be a client during a call, and its number is one (1). Further, a wireless resource utilizability of the access point 10b, being a first-place access point having the radio wave reachability, is 0 (zero). No second-place access point having the radio wave reachability exists (in this case, a retrieval is made with the wireless resource utilizability assumed to be 0).

As a result, the call quality of the access point 10a in the temporal status is calculated as 100 (a first line of Fig. 6). The server 30 compares this calculated value with a settable threshold access point by access point.

Likewise, the call quality of the wireless access point 10c becomes 88 because the clients having the radio wave reachability to the wireless access point 10c are the clients 20a and 20b, and its number is two and no access point having the radio wave reachability exists. Further, it is assumed that the call quality of the wireless access point 10b, of which a corresponding entry is not published in the table, is 100.

It is assumed that the threshold, which can be set access point by access point, has been set as 80 this time, which is common to all of the access points. Then, in the foregoing temporal status, each of the call qualities at all of the access points is equal to or more than the threshold. Thus, in this case, the request for an outgoing call (request for establishing a session) by the client 20a is permitted (S2-10). However, granted that the threshold is 90, the call quality calculated at the wireless access point 10c falls below the threshold. Thus, the request for making an outgoing call (request for establishing a session) is rejected (S2-11).

The point to which an attention should be paid is that in this status, granted that the outgoing call (the establishment of the session) made by the wireless client 20a via the wireless access point 10a has been permitted, the outgoing call by the client 20a induces a deterioration in the call quality at the access point of the cell having an identical frequency, which differs from the cell with which the client 20a has connected.

In the present invention, such an establishment of the new session that causes the call quality of the other access points to deteriorate is rejected. It is apparent from this example that the method of the present invention makes it possible to avoid the situation in which initiating a new session in the wireless client having made a connection with a certain wireless access point resultantly causes the service quality to deteriorate in the communication session of the wireless client having made a connection with another wireless access point.

In this example, it is assumed that the outgoing call (the establishment of the session) has been permitted as a result of the computation. The request for making an outgoing call (request for establishing a session) includes an identifier that is enough for specifying a communication partner, for example, an address or a telephone number of a call destination. The server 30 transmits a request for an incoming call to a wire communication appliance 110a, being a destination of the incoming call, based upon its information. When the wire communication appliance makes a reply hereto (S1-5), its result is transferred to the wireless client 20a (S1-6) and the wireless client 20a starts to transmit/receive an actual call data (S1-7).

In such a manner, with the present invention, the communication control method can be realized that enables the situation, in which initiating a new communication session in the wireless client having made a connection with a certain wireless access point resultantly causes the service quality to deteriorate in the communication session of the wireless client having made a connection with another wireless access point, to be avoided, and the service quality of the application to be maintained in the wireless network in which multifarious wireless access points are arranged, for example, the wireless network in which a plurality of the cells each having an identical frequency are overlapped upon each other.

Additionally, in this embodiment, the information of Fig. 3 was used for controlling the outgoing call (session establishment); however this information can be used for a purpose of monitoring an operational situation of the wireless system by calculating one of the usability and the vacant capacity, or both thereof for each wireless access point or for the entirety of the wireless communication system, which is displayed on a screen in some cases, is preserved in a log in some cases, and is used for sounding an alarm responding to a value in some cases.

### (Another embodiment of the present invention)

Herein, as another embodiment of the present invention, the case will be explained of utilizing the wireless frame being transmitted by the wireless access point in order to determine the radio wave reachability, between the wireless client and each of two wireless access points or more including the wireless access point with which the wireless client is in connection (to determine a first radio wave reachability), and further, similarly utilizing the wireless frame being transmitted by the wireless access point also in order to determine the radio wave reachability between each of the two wireless access points or more and the other (to determine a second radio wave reachability).

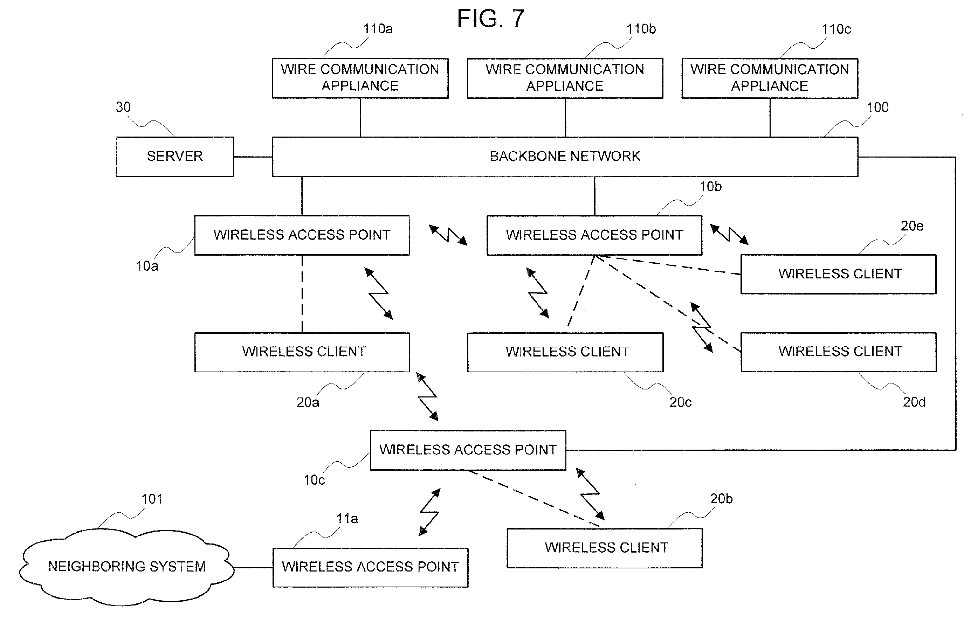

Additionally, this embodiment will be explained by employing the wireless communication system having a configuration of Fig. 7. This configuration, as compared with that of Fig. 1, differs in a point that a total of three wireless clients 10c to 10e are connected with the wireless access point 10b, and a point that a wire communication appliance 110c is connected to the backbone network. In addition hereto, a point in which this configuration differs is that, in this example, a neighboring system 101 having a different management body exists, and a wireless access point 11a connected therewith and the wireless access point 10c have the radio wave reachability, to each other.

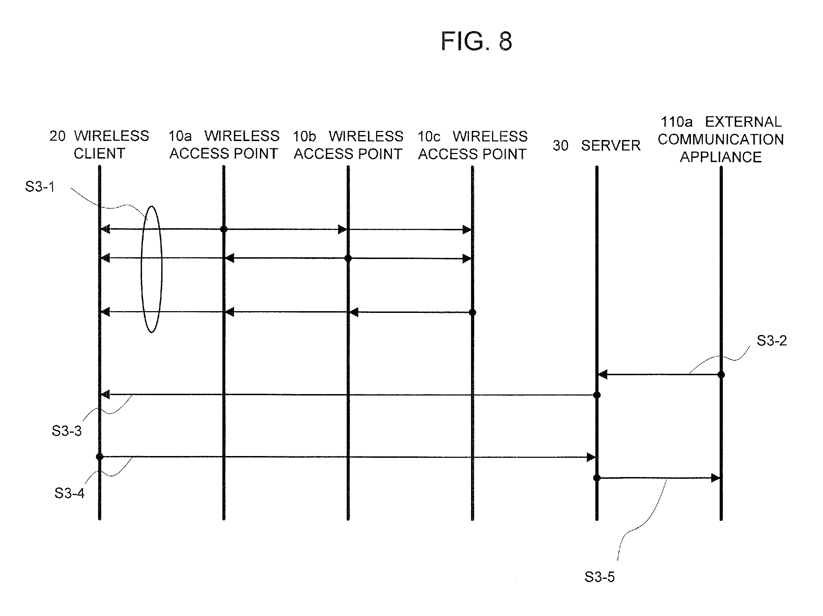

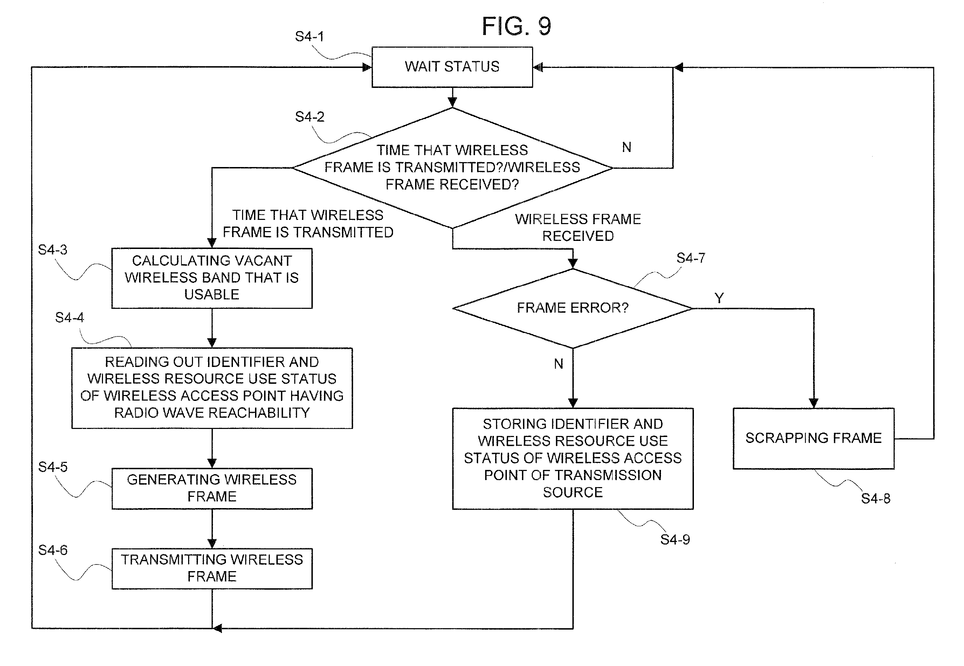

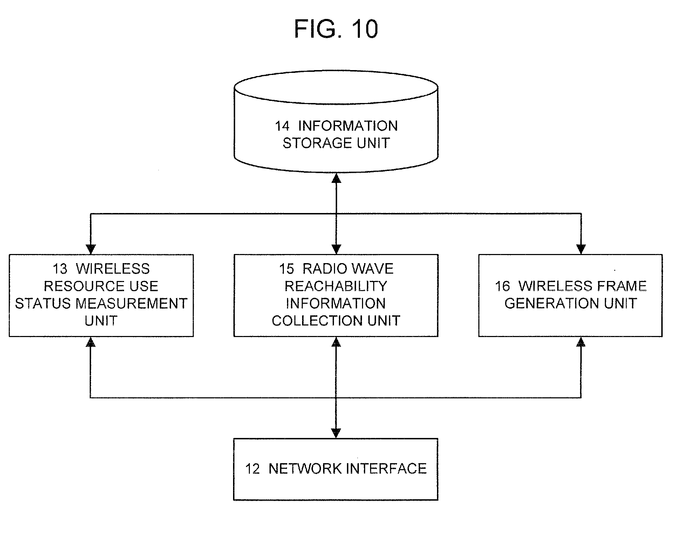

An operation of the present invention in this embodiment will be explained by making a reference to Fig. 8, and further an operation of the wireless access point associated with transmission/reception of the wireless frame will be explained by employing a flowchart of Fig. 9, and Fig. 10, being a block diagram illustrating a configuration of a wireless access point 10, together. Additionally, herein, the case that a client 20a receives a voice call from the wire communication appliance 110a is exemplified. Additionally, similarly to the foregoing embodiment, at this time, it is assumed that a client 20b is making a call to a wire communication appliance 110b, and besides, the wireless clients 10c and 10d are making a call to each other and the wireless client 10e and the wire communication appliance 110b are making a call to each other.

At first, it is assumed that a wireless frame generation unit 16 of the wireless access points 10a to 10c constantly transmits the wireless frame, which is used for determining the radio wave reachability, via a network interface 12 at an almost identical time interval irrespectively of existence or not of the incoming call (S3-1 and S4-6). It is assumed that information indicative of the operation frequency of a wireless access point of the transmission source, and the use status of the wireless resource thereof are included in this wireless frame. It is assumed that information indicative of a vacant wireless band that can be used by its wireless access point is included as the wireless resource use status. The vacant wireless band, which is usable, is calculated by dividing the time during which a wireless medium has not been used, out of a certain constant time, which is measured by a wireless resource use status measurement unit 13, by a measurement time (S4-3), and is pre-stored in an information storage unit 14. In such a manner, by using the vacant wireless band, which is usable, as one index of the wireless resource use status, it becomes possible to take the control that takes into consideration an influence by the wireless network of which the detailed information of the situation cannot be obtained, for example, the neighboring network.

For example, in this example, if it is assumed that the wireless access point 11a of the neighboring network 101 is using 10% of the wireless band, its influence is taken into consideration at the moment of making a computation for a control thorough the fact that the wireless resource use status of the wireless access point 10c is reduced by 10. By the way, as a destination address of this frame, a broadcast address or a private multicast address is used.

Further, a radio wave reachability information collection unit 15 of the wireless access point is pre-configured not to scrap this wireless frame so long as no frame error exists at the time of having received this wireless frame.

In this embodiment, only the wireless access point 10a and 10b can receive the wireless frame from each other without a frame error generated because they have the radio wave reachability to each other.

When the radio wave reachability information collection unit 15 was able to receive the wireless frame without a frame error generated, the information storage unit 14 is caused to store an identifier and a wireless resource use status of its wireless access point (S4-9), and the wireless frame including this information is transmitted at the time of transmitting the wireless frame next time (S4-4).

Doing so enables the appliance having received the wireless frame to obtain information associated with wireless resource use statuses of the other wireless access points that have the radio wave reachability to a transmission source.

In this example, the wireless frame being transmitted by the wireless access point 10a includes an identifier indicative of the wireless access point 10b and a wireless resource use status of the wireless access point 10b in addition to information indicative of the operation frequency of the wireless access point 10a and a wireless resource use status thereof because the wireless access point 10a and the wireless access point 10b have the radio wave reachability each other. With the wireless frame as well being transmitted by the wireless access point 10b, the situation is similar.

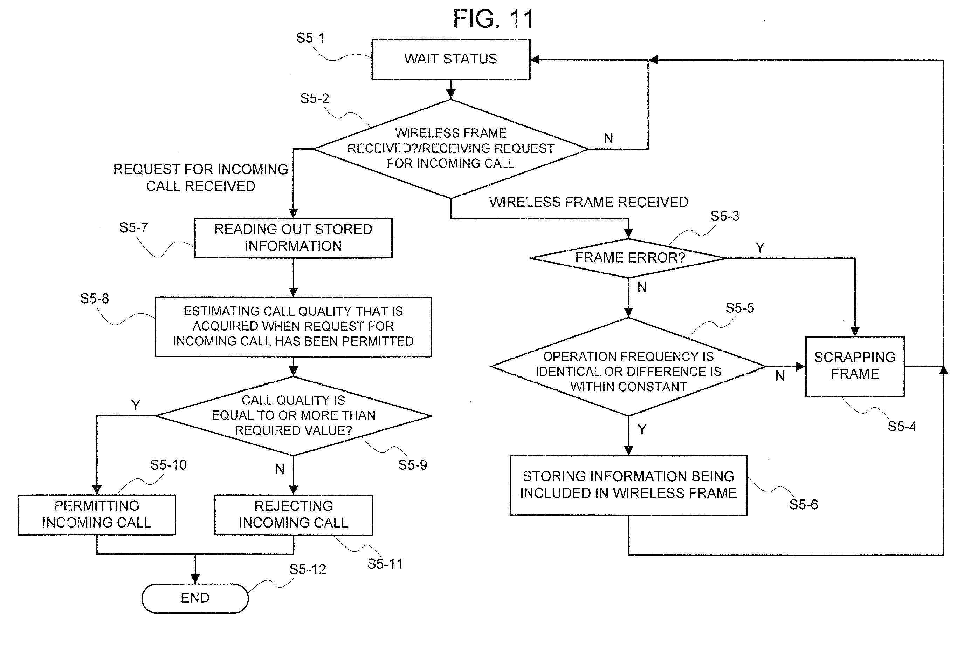

From this, a flowchart as well of Fig. 11 illustrating an operation of the wireless client is employed together for explanation. The wireless client 20a is pre-configured not to scrap this wireless frame so long as no frame error exists when receiving the wireless frame from the wireless access point (S5-3).

In this example, the wireless client 20a receives the wireless frames without a frame error generated from the wireless access points 10a and 10c because it has the radio wave reachability to each of the wireless access points 10a and 10c. At this moment, the wireless client makes a reference to information associated with a frequency channel being included in the received wireless frames, and stores information being included in the corresponding wireless frame for the future when the operation frequency thereof is identical to its own operation frequency, or when a difference of the operation frequency is equal to or less than a constant value (S5-6). Storing the information being included in these wireless frames enables the wireless client to grasp the wireless access point to which its own has the radio wave reachability, the other wireless accesses point to which its wireless access point has the radio wave reachability, and the wireless resource use statuses of these wireless access points. When the information associated with the frequency channel being included in the received wireless frame does not meet the foregoing condition, this wireless frame is scrapped similarly to the case that the frame error exists (S5-4).

By the way, in such a status, it is assumed that the external communication appliance 110a has sent a request for making an outgoing call (a request for establishing a session) to the server 30 (S3-2).

The request for making an outgoing call (the request for establishing a session) includes an identifier that is enough for specifying a communication partner, for example, an address or a telephone number of a call destination. The server 30 transmits a request for making an incoming call to the wireless client 20a, being a destination of the incoming call, based upon its information (S3-3).

The wireless client 20a having received the incoming call firstly reads out the stored information of the radio wave reachability to the wireless access point, information of the radio wave reachability between the wireless access point and each of the wireless access points other than it, and wireless resource use statuses of these wireless access points (S5-7).

And, the call quality that is acquired granted that the incoming call has been accepted is calculated with a method similar to that of the foregoing example (S5-8).

The so-called call quality, which is calculated as already described herein, is a quality value of the call having a worst quality, out of the calls that exist in this temporal status.

In this example, it is assumed that as a result of computation, if the incoming call is accepted, the quality value of the wireless client connected with the wireless access point 10b becomes a value less than a predetermined value. As a result, the incoming call is rejected (S5-11), and its effect is conveyed to the server 30 as a response to the request for making an outgoing call (a request for establishing a session)(S3-4).

Its response result is furthermore conveyed to the wire communication appliance 110a (S3-5), and an establishment of the communication session is prevented. As a result, it becomes possible to prevent deterioration in the quality of the existing voice call accompanied by an establishment of a new call.

Additionally, in the foregoing two embodiments, the example in which a determination as to whether the outgoing call/incoming call (session establishment) was permitted or not was made by the server 30 and the wireless client, respectively, was explained. However, with the former, the mode is also possible in which the appliance for storing the notification destination of the wireless access point and the radio wave reachability information is a management server other than the server 30, this another server makes a determination as to whether the outgoing call/incoming call (session establishment) is permitted or not, and the server 30 appropriately inquires a result of its server, and the mode is also possible in which the same function is provided by the wireless access point or a switch appliance for gathering the wireless access points.

Further, with the latter, the mode is also thinkable in which various items of information that the wireless client has received and has stored are transferred to the server 30 or the other appliances, a determination as to whether the outgoing call/incoming call (session establishment) is permitted or not is made in these transferee's appliances, and only a result is notified to the wireless client.

The above explanation of the embodiment was made on the basis of the conception that the function was realized in a hardware-manner. However, the above-mentioned function can be also realized in a software-manner by loading a program for executing each means (each process) into a computer machine, and executing it. For example, this program is preserved in a magnetic disc, a semiconductor storage device, and a record medium other than these, and is loaded in the computer machine from its record medium, and controlling its operation allows the foregoing functions to be realized.

## Claims

1. A communication control method, **characterized in** comprising:
a first radio wave reachability determination step of determining radio wave reachability between each of one client or more and each of one access point or more;
a wireless resource use status calculation step of calculating a wireless resource use status of said each access point; and
a control step of controlling an establishment of a communication session based upon at least both of a determination result of said first radio wave reachability determination step and a calculation result of said wireless resource use status calculation step.

2. A communication control method according to claim 1, **characterized in that**:
said communication control method comprises a second radio wave reachability determination step of determining radio wave reachability between each of a part of access points and the other; and
said control step is a step of controlling an establishment of the communication session based upon at least all of the determination result of said first radio wave reachability determination step, the calculation result of said wireless resource use status calculation step, and the determination result of said second radio wave reachability determination step.

3. A communication control method according to claim 1, **characterized in that** said first radio wave reachability determination step is a step of making a determination by whether or not said each access point can receive a frame being transmitted by said client without a frame error generated.

4. A communication control method according to claim 1, **characterized in that** said first radio wave reachability determination step is a step of making a determination by whether or not said client can receive a wireless frame being transmitted by said each access point without a frame error generated.

5. A communication control method according to claim 2, **characterized in that** said second radio wave reachability determination step is a step of making a determination by whether or not a frame being transmitted by said each access point can be received by the access point other than the access point having transmitted said frame without a frame error generated.

6. A communication control method according to one of claim 4 and claim 5, **characterized in that** the frame being transmitted by said access point is transmitted at an almost identical time period.

7. A communication control method according to one of claim 4 and claim 5, **characterized in that** the frame being transmitted by said access point includes information indicative of an operation frequency of this access point.

8. A communication control method according to one of claim 4 and claim 5, **characterized in that** the frame being transmitted by said access point includes the wireless resource use status calculated in said wireless resource use status calculation step.

9. A communication control method according to one of claim 4 and claim 5, **characterized in that** the frame being transmitted by said access point includes the determination result of said second radio wave reachability determination step.

10. A communication control method according to claim 1, **characterized in that** said first radio wave reachability determination step is a step of making a determination by whether or not a difference of an operation frequency between said client and said access point is equal or less than a constant value.

11. A communication control method according to claim 2, **characterized in that** said second radio wave reachability determination step is a step of making a determination by whether or not a difference of an operation frequency between each of the access points and the other is equal or less than a constant value.

12. A communication control method according to claim 2, **characterized in**, in said second radio wave reachability determination step, determining whether or not the radio wave reachability exists based upon a result of having retrieved information of the pre-stored radio wave reachability between each of all of the access points and the other.

13. A communication control method according to claim 1, **characterized in that**:
said wireless resource use status calculation step is a step of calculating the wireless resource use status access point by access point; and
said wireless resource use status includes the number of the clients that are in connection with the access point.

14. A communication control method according to claim 1, **characterized in that**:
said wireless resource use status calculation step is a step of calculating the wireless resource use status access point by access point; and
said wireless resource use status includes the number of the clients that are in connection with the access point and yet have established a communication session.

15. A communication control method according to claim 1, **characterized in that**:
said wireless resource use status calculation step is a step of calculating the wireless resource use status access point by access point; and
said wireless resource use status includes information indicative of a vacant wireless band that can be used by the access point.

16. A communication control method according to claim 1, **characterized in that** said communication session is a voice call.

17. A communication control method according to claim 1, **characterized in that** said communication session is a television telephone.

18. A communication control method according to claim 1, **characterized in that** said client is a wireless LAN client and said access point is a wireless LAN access point.

19. A communication control system, **characterized in** comprising:
a first radio wave reachability determining means for determining radio wave reachability between each of one client or more and each of one access point or more;
a wireless resource use status calculating means for calculating a wireless resource use status of said each access point; and
a controlling means for of controlling an establishment of a communication session based upon at least both of a determination result of said first radio wave reachability determining step and a calculation result of said wireless resource use status calculating srep.

20. A communication control system according to claim 19, **characterized in that**:
said communication control system comprises a second radio wave reachability determining means for determining radio wave reachability between each of a part of access points and the other; and
said controlling means controls an establishment of the communication session based upon at least all of the determination result of said first radio wave reachability determining means, the calculation result of said wireless resource use status calculating means, and the determination result of said second radio wave reachability determining means.

21. A server, **characterized in** comprising:
a radio wave reachability/wireless resource use status collection unit for obtaining radio wave reachability between each of one client or more and each of one access point or more, and a wireless resource use status of said each access point; and
a session start determination unit for controlling an establishment of a communication session based upon the radio wave reachability and wireless resource use status obtained by said radio wave reachability/wireless resource use status collection unit.

22. A server according to claim 21, **characterized in that** said radio wave reachability/wireless resource use status collection unit further determines radio wave reachability between each of a part of access points and the other.

23. A program, **characterized in** causing a computer to execute:
a radio wave reachability/wireless resource use status collection process of obtaining radio wave reachability between each of one client or more and each of one access point or more, and a wireless resource use status of said each access point; and
a session start determination process of controlling an establishment of a communication session based upon the radio wave reachability and wireless resource use status obtained in said radio wave reachability/wireless resource use status collection section.

24. A program according to claim 23, **characterized in that** said radio wave reachability/wireless resource use status collection section further comprises a process of determining radio wave reachability between each of a part of access points and the other.

25. A communication monitoring method in a wireless communication system in which one access point or more is provided, and a client makes a connection with one of said access points, and establishes a communication session with other communication appliances via said access point with which it has made a connection, **characterized in** comprising:
a first radio wave reachability determination step of determining radio wave reachability between said client and each of said one access point or more;
a wireless resource use status calculation step of calculating a wireless resource use status of said each access point; and
a monitoring step of calculating one of a usability and a vacant capacity of an entirety of said wireless communication system or a part thereof, or both based upon at least both of a determination result of said first radio wave reachability determination step and a calculation result of said wireless resource use status calculation step.

26. A communication monitoring method according to claim 25, **characterized in that**:
said communication monitoring method comprises a second radio wave reachability determination step of determining radio wave reachability between each of a part of access points and the other; and
said monitoring step is a step of calculating one of a usability and a vacant capacity of an entirety of said wireless communication system or a part thereof, or both based upon at least all of the determination result of said first radio wave reachability determination step, the calculation result of said wireless resource use status calculation step, and the determination result of said second radio wave reachability determination step.

27. A communication monitoring method according to claim 25, **characterized in that** said first radio wave reachability determination step is a step of making a determination by whether or not said each access point can receive a frame being transmitted by said client without a frame error generated.

28. A communication monitoring method according to claim 25, **characterized in that** said first radio wave reachability determination step is a step of making a determination by whether or not said client can receive a frame being transmitted by said each access point without a frame error generated.

29. A communication monitoring method according to claim 26, **characterized in that** said second radio wave reachability determination step is a step of making a determination by whether or not a frame being transmitted by said each access point can be received by the access point other than the access point having transmitted said frame without a frame error generated.

30. A communication monitoring method according to one of claim 28 and claim 29, **characterized in that** the frame being transmitted by said access point is transmitted at an almost identical time period.

31. A communication monitoring method according to one of claim 28 and claim 29, **characterized in that** the frame being transmitted by said access point includes information indicative of an operation frequency of its access point.

32. A communication monitoring method according to one of claim 28 and claim 29, **characterized in that** the frame being transmitted by said access point includes the wireless resource use status calculated in said wireless resource use status calculation step.

33. A communication monitoring method according to one of claim 28 and claim 29, **characterized in that** the frame being transmitted by said access point includes the determination result of said second radio wave reachability determination step.

34. A communication monitoring method according to claim 25, **characterized in that** said first radio wave reachability determination step is a step of making a determination by whether or not a difference of an operation frequency between said client and said access point is equal or less than a constant value.

35. A communication monitoring method according to claim 26, **characterized in that** said second radio wave reachability determination step is a step of making a determination by whether or not a difference of an operation frequency between each of the access points and the other is equal or less than a constant value.

36. A communication monitoring method according to claim 26, **characterized in**, in said second radio wave reachability determination step, determining whether or not the radio wave reachability exists based upon a result of having retrieved information of the pre-stored radio wave reachability between each of all of the access points within the communication system and the other.

37. A communication monitoring method according to claim 25, **characterized in that**:
said wireless resource use status calculation step is a step of calculating the wireless resource use status access point by access point; and
said wireless resource use status includes the number of the clients that are in connection with the access point.

38. A communication monitoring method according to claim 25, **characterized in that**:
said wireless resource use status calculation step is a step of calculating the wireless resource use status access point by access point; and
said wireless resource use status includes the number of the wireless clients that are in connection with the access point and yet have established a communication session.

39. A communication monitoring method according to claim 25, **characterized in that**:
said wireless resource use status calculation step is a step of calculating the wireless resource use status access point by access point; and
said wireless resource use status includes information indicative of a vacant wireless band that can be used by the access point.

40. A communication monitoring system in a wireless communication system in which one access point or more is provided, and a client makes a connection with one of said access points, and establishes a communication session with other communication appliances via said access point with which it has made a connection, **characterized in** comprising:
a first radio wave reachability determining means for determining radio wave reachability between said client and each of said one access point or more;
a wireless resource use status calculating means for calculating a wireless resource use status of said each access point; and
a monitoring means for calculating one of a usability and a vacant capacity of an entirety of said wireless communication system or a part thereof, or both based upon at least both of a determination result of said first radio wave reachability determination means and a calculation result of said wireless resource use status calculation means.

41. A communication monitoring system according to claim 40, **characterized in that**:
said communication monitoring system comprises a second radio wave reachability determining means for determining radio wave reachability between each of a part of access points and the other; and
said monitoring step calculates one of a usability and a vacant capacity of an entirety of said wireless communication system or a part thereof, or both based upon at least all of the determination result of said first radio wave reachability determining means, the calculation result of said wireless resource use status calculating means, and the determination result of said second radio wave reachability determining means.

42. An access point in a wireless communication system in which one access point or more is provided, and a client makes a connection with one of said access points and establishes a communication session with other communication appliances via said access point with which it has made a connection, **characterized in** receiving a frame from said client, and notifying an identifier of said client and a wireless resource use status to a predecided destination when no frame error exists in said frame.

43. An access point according to claim 42, **characterized in that** said wireless resource use status includes the number of the clients that are in connection with its own.

44. An access point according to claim 42, **characterized in that** said wireless resource use status includes the number of the wireless clients that are in connection with its own and yet have established a communication session.

45. An access point according to claim 42, **characterized in that** said wireless resource use status includes information indicative of a vacant wireless band that is usable.
